# FASCICULE DE BREVET EUROPEEN

(11) **EP 3 980 171 B1**
(45) Date de publication et mention de la délivrance du brevet: **02.08.2023**
(21) Numéro de dépôt: 20729075.0
(22) Date de dépôt: 02.06.2020
(51) Int. Cl.: B01J 8/02

(54) **DISPOSITIF DE DISTRIBUTION DE GAZ DANS UN RÉCIPIENT DE TRAITEMENT DE GAZ COMPRENANT UN MATÉRIAU PARTICULAIRE**
VORRICHTUNG ZUM VERTEILEN VON GAS IN EINEM GASVERARBEITUNGSBEHÄLTER, DER EIN TEILCHENFÖRMIGES MATERIAL ENTHÄLT
DEVICE FOR DISTRIBUTING GAS IN A GAS PROCESSING VESSEL COMPRISING A PARTICULATE MATERIAL

(30) Priorité: 07.06.2019 FR 1906107
(43) Date de publication de la demande: 13.04.2022
(73) Titulaire: L'Air Liquide, société anonyme pour l'Étude et l'Exploitation des procédés Georges Claude, 75007 Paris (FR)
(72) Inventeur: SUN, Lian-Ming, 94503 Champigny-sur-Marne (FR); MONEREAU, Christian, 94503 Champigny-sur-Marne (FR); DEMAR, Gregory, 94503 Champigny-sur-Marne (FR)
(74) Mandataire: Air Liquide
(86) Numéro de dépôt international: PCT/EP2020/065157
(87) Numéro de publication internationale: WO 2020/245092

(56) Documents cités:
- EP-A1- 0 719 578
- FR-A1- 2 750 617
- US-A- 2 657 121
- US-A- 5 779 773

## Description

La présente invention est relative à un dispositif de distribution de gaz dans un récipient de traitement de gaz comprenant un premier matériau particulaire. Ce dispositif de distribution permet de maintenir en place le milieu particulaire soumis à la gravité et aux contraintes résultant des mouvements du fluide et d'autre part de participer à la bonne distribution de ce fluide à travers toute la section du récipient.

Dans les installations industrielles, il est fréquent d'utiliser des récipients cylindriques à axe vertical contenant un matériau actif, catalyseur ou adsorbant, pour traiter des fluides gazeux. Il s'agit dans le premier cas de réacteurs et dans le second cas d'adsorbeurs.

Le problème du maintien du matériau réactif et de la distribution homogène du fluide à travers lui a fait l'objet d'un grand nombre de publications décrivant des solutions variées. Parmi les points à résoudre pour avoir un système fiable et performant, on trouve bien sûr la tenue mécanique du supportage lui-même, sa fixation dans l'adsorbeur, les risques de contraintes mécaniques locales trop fortes, la prise en compte des contraintes thermiques, les risques de corrosion locale dus à des obstacles à l'écoulement ou à des points stagnant, la présence de liquide, les problèmes liés à l'étanchéité du système vis-à-vis des particules, les risques de bouchage... Côté distribution, on peut citer les risques de sur ou sous débits liés à la géométrie du système, les survitesses locales pouvant entraîner des phénomènes d'érosion ou d'attrition des particules... On peut noter également l'effet négatif dans bon nombre de procédés, en particulier dans le cas de procédés cycliques comme les procédés de séparation ou d'épuration par adsorption de type TSA et PSA au sens le plus large des termes, du volume libre laissé au fluide sous le matériau actif (volume mort) qui sera donc à minimiser. A cela, on peut ajouter la prise en compte des risques liés à des incidents de procédé tels qu'une pressurisation ou une dépressurisation trop rapide qui peuvent conduire à des surplus importants de contraintes par rapport au fonctionnement normal. Notons que dans les solutions existantes il n'y a pas de conservation de l'intégrité mécanique du fond inférieur et qu'il est proposé au contraire de souder le distributeur sur le fond (le fait de souder le distributeur sur le fond permet de le rendre solidaire de ce dernier et de ce fait d'éviter tout mouvement relatif quoiqu'il puisse se passer). Par intégrité mécanique du fond, on veut signifier dans ce document que le fond ne comporte dans ce cas, aucune soudure ni aucun usinage (rainurage, percement...) au moins dans la zone de contact entre le dispositif de distribution et le fond et préférentiellement sur la totalité du fond compris entre sa jonction avec la virole et sa jonction avec la tubulure de sortie. En effet, un soudage ou un usinage dans cette zone de contact peut entraîner des problèmes métallurgiques tels que des fissures en raison en particulier de la fatigue liée aux cycles de pression ou de température, avec par exemple une pression haute supérieure à 50 bar abs et une pression basse de quelques bars ou une température maximale supérieure à 300°C alors que pour d'autres étapes la température de fonctionnement sera proche de l'ambiante. Certaines unités de type TSA peuvent cumuler ces deux effets de fatigue métallurgique par cyclage en pression et température. US-A-5 779 773 et EP-A-0 719 578 décrivent des récipients de traitement de gaz.

Partant de là, un problème qui se pose est de fournir un dispositif de distribution permettant une distribution homogène du gaz tout en maintenant le matériau actif et en conservant l'intégrité mécanique du fond inférieur.

Une solution de la présente invention est un récipient de traitement de gaz de forme cylindrique à axe vertical comprenant une virole cylindrique d'axe vertical, un fond supérieur, un fond inférieur, un orifice d'entrée, un orifice de sortie, un dispositif de distribution de gaz et un premier matériau particulaire, le dispositif de distribution étant fixé dans ledit récipient en regard de l'orifice d'entrée ou de sortie de gaz débouchant dans le fond inférieur, le dispositif de distribution comprenant :
- une coiffe perméable au gaz, recouvrant ledit orifice et comportant une paroi dont la base, de forme essentiellement circulaire, la coiffe étant agencée pour être en contact sans soudure avec le fond inférieur et présentant un diamètre supérieur ou égal à un tiers du diamètre du récipient,
- un second matériau particulaire de diamètre équivalent De supérieur ou égal à 10 mm et supérieur aux dimensions des ouvertures de la coiffe, le second matériau particulaire étant logé autour de la coiffe au moins jusqu'à une hauteur correspondant à l'extrémité supérieure de la coiffe, et
- un moyen de centrage de la coiffe au-dessus de l'orifice d'entrée ou de sortie, fixé à la tuyauterie qui est reliée à l'orifice.

Par coiffe, on entend ici un système rigide générant un volume libre autour de l'orifice qu'il recouvre. Dans le cas général, le fond du récipient étant bombé (fond hémisphérique, fond elliptique, fond plat avec rebord), la coiffe présentera une concavité opposée à celle du fond du récipient. Il s'agit d'un système à 3 dimensions (3D) qui exclut tout dispositif plan, de type disque, pour des raisons de tenue mécanique. Ce point est repris ultérieurement.

Par base, « de forme essentiellement circulaire », on veut signifier d'abord que la coiffe sera préférentiellement de forme axisymétrique, son axe étant confondu dans la grande majorité des cas avec celui du récipient et avec celui de l'orifice. Cette géométrie sera préférentiellement retenue pour des raisons de meilleure tenue mécanique et de simplicité de réalisation. On trouvera ci-dessous les exemples les plus répandus de ce type de coiffe. L'intersection d'une forme axi symétrique avec le fond du récipient est théoriquement un cercle dès lors que leurs axes de symétrie respectifs sont confondus. Le terme « essentiellement » circulaire se veut quant à lui recouvrir
- d'une part, les écarts à l'idéalité géométrique du fait des tolérances de fabrication du dispositif de distribution, de la virole du récipient, du fond ainsi que du non alignement parfait des axes du récipient, de l'orifice, et dudit système de distribution.
- D'autre part, quelques cas très particuliers où la coiffe aurait une section légèrement ellipsoïdale (liée par exemple à la présence, à côté de la tubulure d'entrée/sortie d'une purge que l'on veut loger dans le dispositif). De telles particularités ne sont pas décrites ici mais restent dans l'esprit de l'invention dès lors que l'on fait en sorte de conserver l'intégrité mécanique du fond de l'adsorbeur.

Lorsqu'on spécifie que la base est en contact avec le fond, on veut indiquer par là qu'il y a un contact effectif entre les deux équipements de telle sorte que le dispositif de distribution est en appui stable sur le fond.

De manière surprenante et contrairement à l'art antérieur connu, l'absence de soudure n'a pas d'impact perceptible sur l'immobilisation de la coiffe par rapport au fond, et ce, malgré les efforts de pression, de température et la circulation du fluide (l'immobilisation est assurée par le moyen de centrage combiné avec le poids du matériau particulaire). L'invention permet de limiter les risques d'apparition de fissures au niveau de la zone de contact entre la coiffe et le fond inférieur. En effet, une soudure peut constituer localement, une zone spécifique avec des propriétés particulières notamment liée à des soufflures (bulles de gaz emprisonnées dans le métal) ou à des inclusions (fragments d'oxydes.), ou à des morsures (modifications locales dues à local due à une trop grande énergie lors de la soudure), etc... Ces zones spécifiques, combinée d'une part à l'effet dit de « fatigue » (variations liées au changement de pression et/ou de température d'un PSA ou d'un TSA) et d'autre part à l'effet dit de « fragilisation hydrogène » (l'hydrogène fragilise le métal), peuvent provoquer l'amorce de fissures.

Selon le cas le dispositif selon l'invention peut présenter une ou plusieurs des caractéristiques ci-dessous :
- le récipient comprend deux tuyauteries reliées respectivement au fond supérieur et au fond inférieur, de préférence par l'intermédiaire, au moins pour la tuyauterie reliée au fond inférieur, d'une pièce de jonction soudée de part et d'autre au fond inférieur et à la tuyauterie.
- le diamètre interne de la virole est compris entre 0.5 m et 6 m.
- la coiffe présente une paroi dont la base présente un diamètre supérieur ou égal à la moitié du diamètre du récipient.
- le second matériau particulaire est de diamètre équivalent De supérieur ou égal à 25 mm.
- le second matériau particulaire est logé au-dessus de la coiffe au moins jusqu'à une hauteur supérieure ou égale à la hauteur de la coiffe plus 50 mm.
- Le second matériau particulaire peut être identique au premier matériau particulaire dès lors que ce dernier à un diamètre équivalent d'au moins 10mm.
- la coiffe est soit de forme conique, soit en forme de calotte sphérique, soit en forme de cône tronqué avec la face en regard de l'orifice d'entrée ou de sortie essentiellement horizontale, soit de forme cylindrique avec la face en regard de l'orifice d'entrée ou de sortie essentiellement horizontale ;
- la coiffe présente une paroi dont la base a été usinée de sorte que le contact entre la coiffe et le fond inférieur du récipient ne soit pas ponctuel ;
- Le contact entre la coiffe et le fond s'effectue sur au moins 50% de la longueur de la base de la coiffe, préférentiellement sur au moins 80% et encore préférentiellement sur plus de 95% de cette longueur.

On fait en sorte de maximiser la surface d'appui de la coiffe sur le fond pour limiter les contraintes mécaniques. Elle ne sera généralement pas égale à 100% du fait de jeux locaux pouvant résulter des tolérances de fabrication ou créés volontairement pour l'évacuation de poussières ou de liquides éventuels. Un joint légèrement élastique pourrait être insérer entre le bord de la coiffe et le fond mais cet arrangement qui introduit un élément supplémentaire ne serait à priori retenu qu'en cas de tolérances excessives.
- la coiffe présente un taux d'ajourage variable avec un taux pouvant varier entre 0 et 60% selon l'emplacement sur la coiffe, ou un taux constant choisi entre 5 et 40%.

Par taux d'ajourage constant, on veut signifier que toute la surface de la coiffe, à l'exception éventuellement de la bande inférieure qui va assurer le contact avec le fond, est perforée avec un même taux de vide, par exemple 35%. A l'inverse on peut adapter le taux d'ajourage selon la géométrie, perforer à seulement 5% la section faisant face à l'ouverture et jusqu'à 60% la partie proche de la base. Des calculs de mécanique des fluides permettent de tester différentes approches. Le choix est généralement un compromis entre performance et complexité.
- la coiffe est recouverte d'un treillis métallique constitué préférentiellement d'une grille surmontée d'une toile métallique souple perméable au gaz ; ladite toile remonte préférentiellement sur le fond, sur une longueur de l'ordre de 10 à 50mm en vue d'assurer à ce niveau une étanchéité vis-à-vis de particules de dimension supérieure à quelques centaines de microns.
- le moyen de centrage est constituée d'une tige dont l'extrémité supérieure est fixée à la coiffe et d'un moyen de maintien de ladite tige au centre de la tuyauterie ;
- ledit dispositif comprend un déflecteur placé en position horizontale dans le volume libre compris entre la coiffe et le fond inférieur du récipient ;
- le déflecteur présente une forme circulaire et de diamètre Dd supérieur ou égal au diamètre de l'orifice d'entrée ou de sortie ;
- ledit dispositif comprend un espace libre entre le déflecteur et la coiffe ; le déflecteur pourra éventuellement présenter au moins localement des ouvertures permettant le passage du fluide vers le volume libre situé au-dessus de lui.

L'invention a aussi pour objet une unité d'épuration ou de séparation de gaz par adsorption de type PSA ou TSA comprenant au moins un adsorbeur mettant en oeuvre un récipient tel que décrit précédemment.

L'invention va à présent être décrite de manière plus détaillée à l'aide des figures.

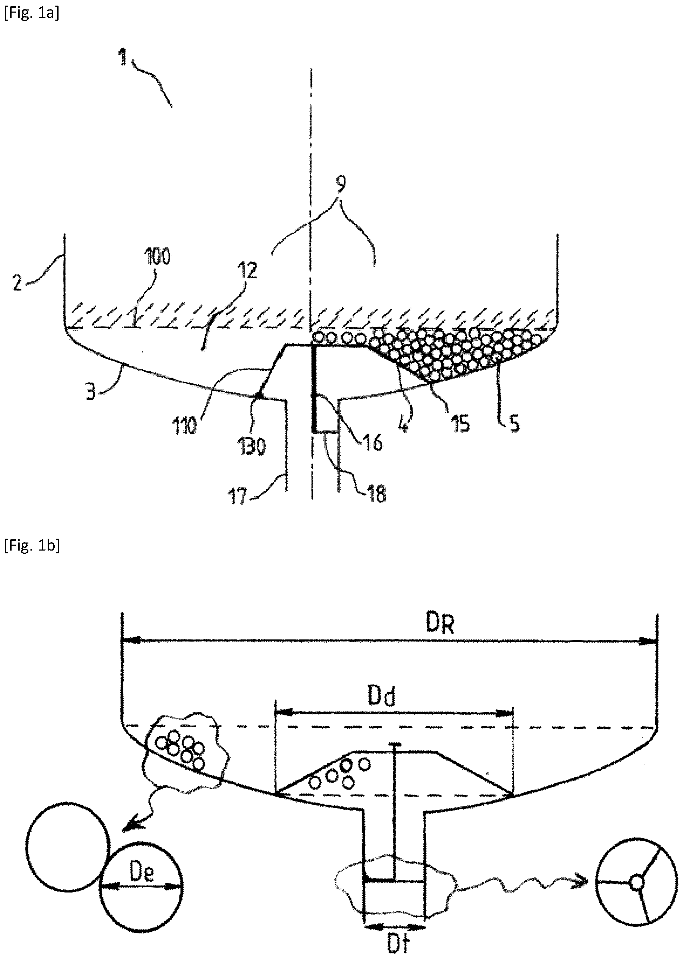

La [Fig. 1a] est destinée à expliquer comment est modifié l'agencement des équipements décrit dans le document FR 2 750 617 et les avantages qui en découlent. La [Fig. 1b] précise quelles sont les dimensions (Dr, Dd, De, Dt) qui sont utilisées dans la description. Concernant la Figure 1.a, le côté gauche du schéma correspond à l'art antérieur et le droit à la solution ici proposée. Un récipient 1 comporte une virole cylindrique 2 et en partie basse un fond inférieur 3, de type elliptique dans cet exemple. Une tubulure d'entrée/sortie 4 est positionnée en partie inférieure du fond. Dans la solution de l'Art Antérieur, un distributeur 110 tronconique est surmonté d'une grille 100 qui maintient elle-même le milieu particulaire actif 9. L'espace entre le distributeur 110 et la grille support 100 est essentiellement vide et permet une bonne distribution des flux même avec un distributeur de faible diamètre à la base. La grille est soit soudée à la virole soit supportée par des gousset en appui sur le fond non représentés ici. C'est cette grille qui supporte les contraintes liées au poids du lit et aux flux en circulation. Le distributeur 110 n'est soumis qu'aux efforts liés à sa traversée par le fluide. Il doit être néanmoins maintenu en place, ce qui se fait par une soudure sur le fond au niveau de sa base 130 plus ou moins éloigné du raccord du fond avec la tubulure.

Par comparaison, à droite, la coiffe 4 du support de distribution de la solution proposée a une paroi latérale beaucoup plus étendue. Le diamètre de sa section de base 15, en contact avec le fond 3 est au moins égal à un tiers du diamètre de la virole et préférentiellement au moins égal à la moitié de ce diamètre. Le trajet du gaz sortant par les orifices inférieurs du distributeur est sensiblement plus court que dans le cas précédent et il est possible de remplir l'espace autour de la coiffe d'un second matériau particulaire 5 au moins jusqu'à sa partie supérieure, voire au-delà par exemple jusqu'au point de tangence entre fond et virole, comme représenté ici. Il est ensuite possible de mettre par-dessus des couches horizontales de matériaux actifs 9 (premier matériau particulaire). Entre les différentes couches de matériaux particulaires, on installera si on le juge nécessaire, des toiles ou des grilles de séparation afin d'éviter tout mélange entre couches de nature différentes. La décision prend en compte les caractéristiques physiques des différents matériaux (dimension, densité, forme) mais aussi d'autres aspects tels que la probabilité d'incidents (par exemple, risques de sur débit) ou les procédures de vidange et remplissage (par exemple, récupération d'un matériau sans risque de mélange). Les contraintes verticales liées au poids des matériaux et aux flux en circulation s'appliquent en partie directement sur le fond, en partie sur le support-distributeur qui les retransmet au fond via sa surface d'appui 15. On notera que l'appui se fait tout le long d'un diamètre relativement important et non de façon plus ponctuelle comme dans le cas de goussets ou de pieds supports. Le système est naturellement maintenu en place par les particules 5 du second matériau particulaire qui l'entoure et ne nécessite par sécurité qu'un simple guide de centrage, par exemple une tige 16 elle-même maintenue au centre de la tubulure d'entrée/ sortie 17 par un système adéquat ne causant pas de restriction sensible au passage des flux, par exemple 3 pattes 21 à 120 ° soudées à la tuyauterie 18. Les dimensions retenues pour le dispositif, à savoir dans cet exemple un distributeur tronconique défini par sa section supérieure, sa base et sa hauteur (ou l'angle du cône) est un compromis entre distribution du fluide et tenue mécanique du dispositif. Une base de grande dimension par exemple peut favoriser la distribution du gaz mais au détriment de la tenue mécanique de la paroi latérale. Inversement, un système de petite taille sera mécaniquement résistant mais imposera des contraintes de distribution telles que l'utilisation de particules de grande dimension (50mm ou plus) en partie inférieure et des hauteurs de distribution supérieures. Un diamètre de base du distributeur compris entre 1/3 et 2/3 du diamètre du récipient est une bonne approche pour un premier dimensionnement dont la finalisation sera économique.

De la sorte le fond inférieur 3 ne comporte aucune soudure ni aucun usinage susceptible d'affaiblir sa tenue mécanique. On dit dans ce cas qu'il conserve sa totale intégrité mécanique.

Ce point déjà abordé est particulièrement important car bon nombre de ces récipients sont utilisés dans des procédés très exigeants du point de vue tenue mécanique. Il peut s'agir de procédés d'adsorption de type PSA au sens large couvrant le domaine de pressions allant de plus de 50 bar abs au vide inférieur à 200 millibar abs et englobant ce qu'il est coutume d'appeler PSA, VPSA et VSA ; Il peut s'agir également de procédés de type TSA dans lequel il est courant d'utiliser des températures de régénération allant au-delà des 200°C. S'agissant de procédés cycliques, les adsorbeurs sont soumis en permanence à des variations de pression et/ou de température qui fatiguent les matériaux utilisés. Une unité TSA peut dépasser les 4000 cycles de température par an alors qu'une unité PSA peut quant à elle aller au-delà de 500 000 cycles de pression par an. La présence d'humidité, de produits plus ou moins corrosifs, de gaz comme l'hydrogène qui a tendance à diffuser dans les aciers aggravent ces phénomènes de fatigue. Il est bien connu que les fissures et plus généralement les défauts s'amorcent alors dans les points singuliers que sont les soudures et les usinages divers. Le fait de supprimer tous ces points singuliers et en particulier aux endroits où le fond est soumis à des contraintes plus élevées, comme les surfaces d'appui, va permettre de rallonger sensiblement la durée de vie des équipements, d'utiliser éventuellement des épaisseurs moindres, de supprimer ou d'espacer des examens périodiques coûteux.

De même, de nombreux réacteurs de catalyse sont soumis à des pressions très élevées (> 50 bar abs) et/ou à des températures dépassant les 300°C. Là également la suppression des singularités que sont les soudures ou les usinages afin de respecter l'intégrité des fonds peut être d'un grand intérêt.

L'utilisation de particules de diamètre équivalent supérieur ou égal à 10 mm, voire à 25 mm, pour le second matériau particulaire, permet aux fluides de circuler facilement à travers elles et à se distribuer dans toute la section du récipient. Ces particules seront généralement des particules support inertes dont il existe plusieurs fournisseurs spécialisés mais cela pourra être également un matériau actif choisi avec un diamètre spécialement élevé. Outre le fait que ces particules maintiennent les lits d'adsorbants ou de catalyseur placés par-dessus, elles diminuent le volume libre dans le fond de l'adsorbeur ou du réacteur qui est généralement néfaste au procédé, conduisant par exemple à une diminution du rendement d'extraction des unités PSA. Pour mémoire, le diamètre des particules actives (premier matériau particulaire), en particulier s'il s'agit d'adsorbant, est généralement dans la fourchette allant de 5 à 0.5 mm et majoritairement entre 3 et 0.7 mm. Un matériau avec de telles dimensions limiterait la distribution radiale du fluide vers la périphérie et conduirait à des sous débits locaux.

La séparation entre le premier matériau particulaire et le second matériau particulaire peut se faire via l'utilisation de différentes granulométries successives empêchant toute interpénétration des couches ou par l'usage de toile perforée disposées entre couches successives. Ce point bien connu de l'homme du métier ne sera pas plus développé ici.

La [Fig. 1b] montre un distributeur de gaz selon l'invention avec un ratio Dd/Dr de 0.43, des billes inertes de support de 50mm de diamètre (second matériau particulaire) recouvrant le distributeur de gaz et un guide de centrage fixé à la tubulure par 3 pattes à 120° dont le détail, en coupe horizontale, figure sur le croquis de droite. Le fond, ici de type elliptique est soudé d'un côté à la virole et de l'autre à la tubulure. Il a conservé son intégrité mécanique, en particulier dans la zone d'appui du support-distributeur.

On a décrit de façon plus générale un tel distributeur comme ayant une surface essentiellement horizontale en face la tubulure d'entrée/sortie et une paroi latérale en appui sur le fond. En effet, si un distributeur de gaz tronconique tel que choisi ici a les avantages d'être simple, stable et avoir un axe de symétrie confondu avec celui du récipient et donc favorable à une bonne distribution, d'autres variantes sont bien sûr possibles comme des troncs de pyramide par exemple. La face supérieure est dite essentiellement horizontale car c'est la géométrie habituelle simple retenu pour un brise-jet. Là aussi, on peut utiliser des formes un peu plus complexes sans changer l'idée de l'invention.

On notera que l'on utilise des coiffes ayant une concavité (inverse de celle du fond) en excluant par exemple du champ de l'invention une plaque plane circulaire qui reposerait également par son extrémité périphérique sur le fond. Une telle plaque plane perforée a une résistance mécanique bien moindre que les solutions retenues ici, forme tronconique et calotte sphérique. Elle va très généralement nécessiter des raidisseurs, installés en étoile ou en parallèle qui vont gêner la distribution des fluides et/ou créer des contraintes locales.

Néanmoins, une solution plaque plane est possible pour des récipients de faible diamètre, ou pour des charges faibles, par exemple une couche mince de matériau actif placée au-dessus et peu de contraintes liées à la circulation des fluides. Dans les autres cas, sa tenue mécanique intrinsèque conduirait à des épaisseurs et des poids peu réalistes. La solution préconisée ici est plus générale et plus sûre à la fois pour la tenue mécanique et pour la bonne distribution des fluides.

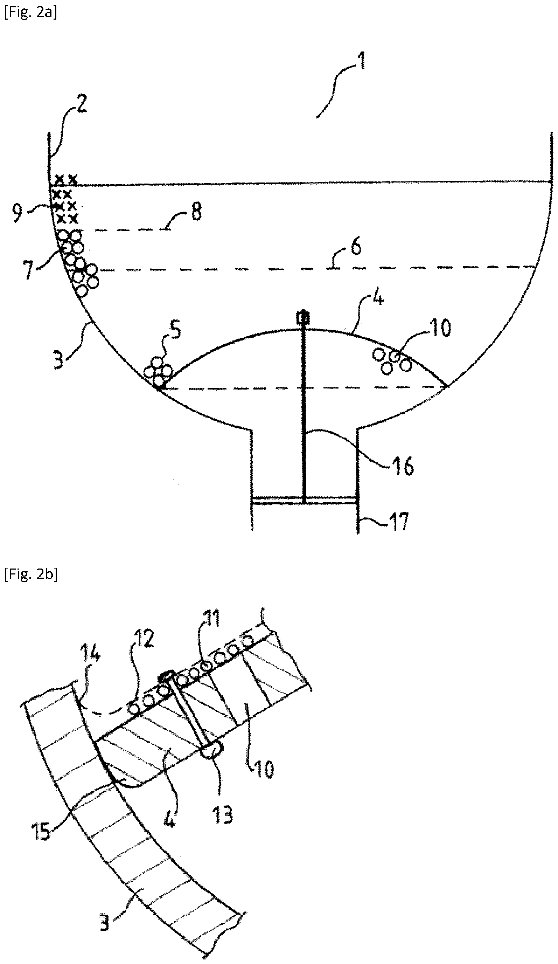

La [Fig. 2a] correspond à un distributeur de gaz selon l'invention avec une coiffe en forme de calotte sphérique dans un récipient 1 ayant un fond inférieur de type hémisphérique 3 soudée à la virole 2. La coiffe 4 est surmontée de billes inertes 5 de diamètre 25mm jusqu'à atteindre une section 6 d'environ 85% de la section de la virole. Au-dessus de cette couche est disposée directement une autre couche 7 de billes inertes de diamètre 10mm, une toile métallique 8 d'ouverture 0.7mm puis le matériau actif 9 , ici par exemple un adsorbant de granulométrie moyenne 1.8 mm avec moins de 2% poids de particules inférieure à 1.0mm. Notons que les billes inertes 5 et 7 constituent dans le cas présent le second matériau particulaire. De la sorte, il n'y a pas de pénétration possible entre les différentes couches successives hormis d'éventuels débris (particules cassées, résidu de soudure...).

La coiffe 4 à un taux de passage libre constant de 35% environ créée par des trous 10 de 10 mm de diamètre. Afin que ces trous ne puissent être au moins partiellement bouchés par les billes support inertes, elle est recouverte d'une grille métallique 11 ayant des fils d'un mm de diamètre, elle-même recouverte d'une toile métallique souple 12 ayant des fils de 0.3mm. Le détail [Fig. 2b] montre ces divers éléments 11, 12 maintenus par des rivets 13 ainsi que l'étanchéité 14 aux fines particules à la périphérie. Ce système constitue une sécurité vis-à-vis de débris divers (particules brisées, fragments de soudure, résidu de meulage...) qui pourraient s'infiltrer à travers les différentes couches comme signalé plus haut et venir s'accumuler éventuellement dans la zone d'appui entre le support-distributeur et le fond. Il permet également d'éviter le bouchage de passages destinés à l'écoulement éventuel de liquides. On retiendra une toile métallique dont l'ouverture sera de quelques centaines de microns (de 100 à 500 microns par exemple), généralement pas plus fine pour éviter des bouchages avec des poussières.

L'extrémité 15 de la coiffe 4 est usinée afin d'améliorer l'appui sur le fond inférieur 3 et d'éviter tout effet de poinçonnage. Sans cet usinage, on aurait à priori un seul point de contact avec le fond pouvant générer des contraintes locales élevées. D'autres solutions peuvent être mise en oeuvre (joint, patin...) pour diminuer ces contraintes locales dès lors qu'elles ne conduisent pas à effectuer des soudures ou des usinages sur le fond.

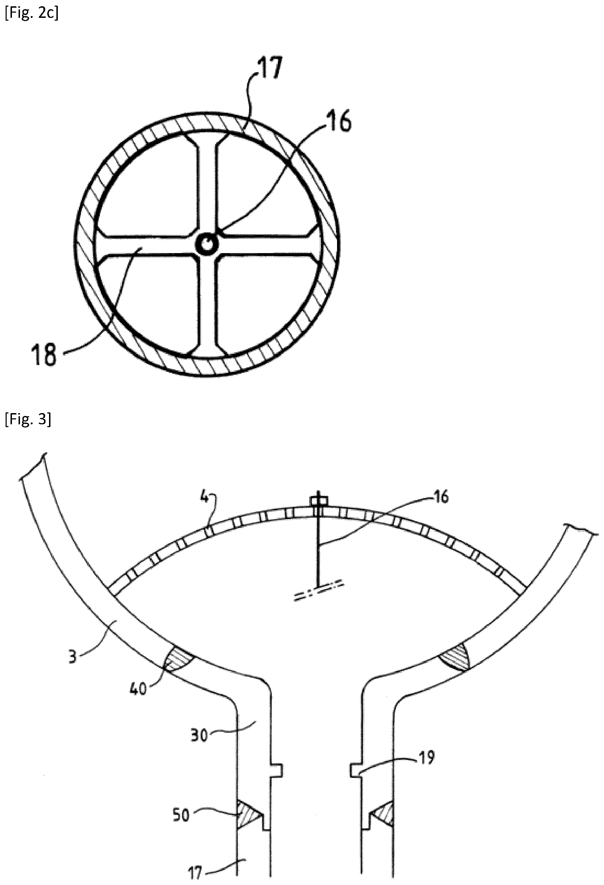

Dans cet exemple, comme le montre le détail de la [Fig. 2c] la tige du moyen de centrage 16 permettant de centrer la coiffe 4 est maintenu dans l'axe de la tuyauterie 17 et du récipient 1 par un croisillon à 4 bras 18 soudé sur un diamètre intérieur de la tuyauterie.

Comme déclaré initialement, un certain nombre de dimensions ou de détails de réalisation sont donnés ici à titre d'exemple, l'invention ne se limitant pas à ses indications particulières.

Avec un tel agencement, le fond du récipient conserve sa totale intégrité mécanique, ce qui est l'objet principal de l'invention. Comme on l'a dit précédemment, le fait de conserver l'intégrité mécanique du fond à plusieurs intérêts dont celui en particulier de pouvoir utiliser des épaisseurs de matériau plus faibles. Dans ces conditions, la jonction entre le fond et la tuyauterie peut devenir le point faible du système. Pour des conditions de fonctionnement contraignantes (cycles de pression et/ou température), il peut convenir comme représenté sur la [Fig. 3], d'améliorer cette jonction en utilisant une pièce de raccord 3 soudée d'une part au fond 3 du récipient dont l'ouverture inférieure a été agrandie par rapport au diamètre Dt de la tuyauterie 17 et d'autre part, dans sa partie verticale à la tuyauterie. La [Fig. 3] montre le principe de cet agencement. On notera que la soudure 40 entre la partie inférieure du fond et la pièce de jonction n'est pas dans la zone d'appui entre la coiffe 4 et le fond 3. On respectera une distance minimale de 20mm et préférentiellement d'au moins 50mm. Le moyen de centrage 16, non représenté dans sa totalité, pourra être rendu solidaire de la pièce de raccord, par exemple au niveau de sa couronne interne 19.

Cette pièce de raccord est réalisée préférentiellement en acier forgé afin de maximiser la tenue mécanique.

En pratique, la soudure 4 entre le fond et la pièce de jonction se fait le long d'un diamètre Dj, Dj étant généralement compris, suivant les dimensions respectives de la tubulure, du fond et du récipient, entre 1.2 Dt et 4 Dt, Dt étant le diamètre interne de ladite tubulure.

Pour des diamètres de virole du récipient importants, mettons supérieurs à 1.5 ou 2.0 mètres, le système décrit jusqu'à présent peut conduire à un déficit de fluide à la périphérie de la virole, au moins au début de la zone de matériau actif. Ce sous-débit même localisé peut être défavorable à l'obtention des performances optimales dans certains procédés. Ce défaut éventuel peut être corrigé en mettant en oeuvre un déflecteur placé dans le volume libre compris entre le fond du récipient et la coiffe, au droit de la tubulure d'entrée/sortie. Ledit déflecteur est préférentiellement circulaire et son diamètre maximal Dd est tel qu'il est égal ou supérieur au diamètre interne de la tubulure Dt et laisse un espace libre au gaz à sa périphérie. Cet espace donne la possibilité au fluide d'alimenter le volume libre situé au-dessus du déflecteur. On a retenu dans la suite de la description un déflecteur simple en forme de disque. Bien évidemment, d'autres géométries sont possibles pour ce déflecteur, comme une forme en V inversé, comme des systèmes de type diffuseur d'air conditionné séparant le fluide en plusieurs zones d'écoulement successives ou autres géométries connues plus ou moins complexes. Ledit déflecteur peut éventuellement présenter au moins localement des ouvertures, par exemple une série de trous conduisant à un taux d'ajourage de 5 à 10%, permettant le passage direct du fluide vers le volume libre supérieur.

Ce déflecteur n'étant soumis qu'aux contraintes liées à la circulation des fluides, il peut être maintenu en place par des supports en appui sur le fond et/ ou sur la pièce de jonction. Ces supports, non soudés sur le fond, peuvent avoir des formes différentes.

Préférentiellement, on utilisera 3 panneaux à 120° ou deux panneaux qui se croisent orthogonalement et reliés ensemble par une hauteur commune centrale et forment une sorte de croisillon. Le déflecteur est alors fixé à l'horizontale, vissé par exemple orthogonalement aux panneaux et donc à l'axe du récipient et de sa tubulure d'entrée/sortie inférieure. Préférentiellement encore, une partie de ces panneaux verticaux descendra dans la tubulure ou dans la partie inférieure de la pièce de jonction où ils seront bloqués (soudure, bossage ou tout autre moyen adéquat). On notera que là également, il n'y a pas de soudure ni d'usinage pratiqué sur le fond inférieur du récipient.

L'axe central des panneaux supportant le déflecteur étant confondu avec l'axe du récipient, il l'est également avec l'axe du guide de centrage du support-distributeur. Ce guide peut donc servir de centrage à la fois pour les panneaux et le déflecteur.

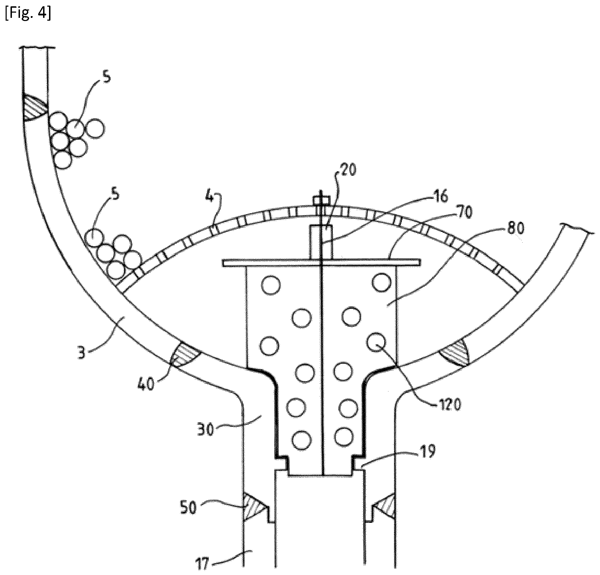

Afin d'éclairer la présente description, un agencement possible du système comprenant le support-distributeur et le déflecteur est donné comme exemple de réalisation dans la [Fig 4]. Le fond inférieur 3, hémisphérique dans cet exemple, est rendu solidaire de la tubulure d'entrée/sortie 17 par l'intermédiaire de la pièce de jonction 30 en acier forgé. Ces éléments sont reliés par les soudures circulaires 40 et 50.

Par souci de clarté, les billes support inertes (second matériau particulaire) ne sont montrées que localement 5, le premier matériau particulaire situé au-dessus n'a pas été représentés de même que la grille recouvrant la coiffe 4. Le déflecteur en forme de disque 70 situé au droit de la tubulure est maintenu en place par 4 morceaux de tôle métallique 80 découpés pour venir en appui sur la gorge de la pièce de jonction et de coulisser en partie inférieure dans la couronne 19 qui vient en léger rétrécissement du diamètre interne de la pièce de jonction.

La tige 16 (moyen de centrage) permet de centrer la coiffe lors de sa mise en place et de le maintenir dans cette position. Les tôles métalliques 80 qui soutiennent le déflecteur 70 sont fixées à cette tige ; Grace à un tel agencement, elle se trouve par réalisation dans l'axe du récipient. La pièce 20, non décrite jusqu'à présent, est un petit tube cylindrique qui repose sur le déflecteur et dont la longueur est telle qu'il y a un jeu, mettons de 5 à 10mm entre son extrémité supérieure et la coiffe. Ce tube n'a juste qu'une fonction de sécurité dans des cas de fonctionnements anormaux. Il limiterait le soulèvement éventuel du déflecteur ou reprendrait une partie des efforts en cas de contraintes anormales appliquées de haut en bas sur la calotte sphérique.

Il est préférable d'effectuer le dimensionnement détaillé du système en ayant recours à un logiciel de mécanique des fluides, au moins initialement, pour déterminer le choix des principaux paramètres en fonction des diamètres respectif de la virole du récipient et de la tubulure d'entrée/ sortie, du type de fond (elliptique, plat, hémicylindrique...), de la qualité de la distribution souhaitée. On conçoit en effet que sans précaution particulière, en particulier en l'absence de déflecteur, la partie centrale du récipient, située au droit de la tubulure d'entrée/sortie verrait de par sa position un sur débit par rapport au débit moyen et qu'au contraire la zone périphérique serait en sous-débit. On dispose de plusieurs moyens comme on l'a vu, pour remédier à ces problèmes. Le taux de perforation de la coiffe peut être variable, plus faible dans sa partie centrale que vers la périphérie. Le rôle du déflecteur est d'orienter le flux horizontalement afin de le diriger vers la périphérie. Il peut néanmoins être légèrement perforé pour ne pas réduire trop fortement le débit dans l'axe du récipient. On a vu que les billes support inertes (second matériau particulaire) avaient à la fois pour but de maintenir le matériau actif (premier matériau particulaire) et de réduire le volume mort entre la coiffe et le lit de matériau actif. Bien que le taux de vide soit en première bonne approximation indépendant du diamètre des billes (et de l'ordre de 35%), on retiendra des billes -ou des particules- de diamètre suffisamment élevé pour ne créer que peu de pertes de charge. Outre le fait que ces dernières sont souvent défavorables aux procédés, des pertes de charge élevées freineraient la diffusion des fluides vers la périphérie. On conçoit par contre que d'utiliser des particules plus grosses rend plus délicat l'empilage des couches successives, en particulier l'étanchéité vis-à-vis des particules les plus petites. On utilise couramment des particules de diamètre équivalent de 25 mm (1 ") ou de 50mm (2''). Le diamètre de la coiffe, sa position par rapport au fond, la position et la dimension du déflecteur, les taux de perforation... ont également un rôle important dans la distribution et tous ces paramètres doivent être choisis en connaissance de cause (expérience, simulation, calculs de pertes de charge...).

Dans le cas de notre exemple, le diamètre de la sphère correspondant à la coiffe est approximativement égal au diamètre de la virole. Il sera généralement compris entre 75 et 125% de ce diamètre. Sa circonférence d'appui a un diamètre d'environ 70% de celui de la virole du récipient. Cette valeur sera généralement comprise entre 33 et 80%, préférentiellement entre 50 et 70%.

La coiffe est ici largement perforée avec un taux de vide l'ordre de 35% constant. Un taux élevé est favorable à la distribution, en particulier vers la périphérie. Il affaiblit par contre la tenue mécanique et un compromis doit être trouvé. En l'absence de déflecteur, ce taux serait variable, de l'ordre de 5% au centre et de 40% à la périphérie de la calotte.

Le déflecteur est situé à environ 70% de la hauteur disponible entre extrémité basse du fond inférieur et extrémité haute de la coiffe. Le disque a un diamètre égal à 2.5 fois celui de la tubulure laissant une section libre suffisante entre son extrémité et la calotte sphérique. La position du déflecteur (hauteur, diamètre) dépend très fortement du type de fond et de la géométrie retenue pour le support-distributeur. Un schéma à l'échelle permet une bonne initialisation des dimensions à retenir, un calcul de mécanique des fluides pouvant optimiser comme on l'a déjà dit si nécessaire ces dites dimensions.

On a représenté les plaques 80 support du déflecteur avec des orifices 120. La veine du fluide étant partagée à l'entrée du récipient en 4 secteurs par ce support, cela permettrait ainsi si besoin, un rééquilibrage des flux. Cela pourrait être le cas en présence d'un coude à courte distance de l'entrée dans le récipient.

On peut vérifier que l'agencement retenu reprend bien les caractéristiques de l'invention à savoir que le distributeur de gaz comporte d'une part une coiffe, installée de façon à ce que sa concavité soit opposée à celle du fond du récipient, dont le bord inférieur circulaire de diamètre Dd est en contact avec la paroi intérieure du fond et d'autre part un moyen de centrage une tige de centrage. Le fond du récipient conserve sa totale intégrité mécanique dans les zones de contact avec la circonférence de la calotte en appui sur ce fond. Le diamètre de contact Dd est supérieur ou égal au tiers du diamètre du récipient. Un second matériau particulaire de diamètre équivalent De supérieur à 10 mm, rempli la partie du fond située au-dessus du distributeur de gaz, au moins jusqu'à une hauteur correspondant à l'extrémité supérieure dudit support.

La conjonction de ces caractéristiques dans un même élément permet d'avoir un système à la fois mécaniquement sûr pour supporter le poids des matériaux et les contraintes liées à la circulation des fluides et favorable à l'obtention de performances optimales via la bonne distribution des fluides et la réduction des volumes morts.

Aussi, la présente invention a enfin pour objet une unité d'épuration ou de séparation de gaz par adsorption de type PSA ou TSA comprenant au moins un adsorbeur mettant en oeuvre un dispositif de distribution de gaz selon l'invention.

Le procédé de type TSA (température swing adsorption = adsorption à variation de température) sera par exemple une épuration de gaz de synthèse avant une séparation cryogénique, de gaz naturel, procédés fonctionnant généralement sous pression (> 30 bar) avec une température de régénération élevée (200°C).

Dans le cas d'un procédé de type PSA (pressure swing adsorption = adsorption à variation de pression), la fatigue mécanique des équipements proviendra des variations rapides de pression (PSA H2, VSA O2, VPSA O2....).

## Revendications

1. Récipient (1) de traitement de gaz de forme cylindrique à axe vertical comprenant une virole cylindrique d'axe vertical, un fond supérieur, un fond inférieur (3), un orifice d'entrée, un orifice de sortie, un dispositif de distribution de gaz et un premier matériau particulaire (9), le dispositif de distribution étant fixé dans ledit récipient (1) en regard de l'orifice d'entrée ou de sortie de gaz débouchant dans le fond inférieur (3), le dispositif de distribution comprenant :
- une coiffe (4) perméable au gaz, recouvrant ledit orifice et comportant une paroi dont la base, de forme essentiellement circulaire, la coiffe (4) étant agencée pour être en contact (15) sans soudure avec le fond inférieur (3) et présentant un diamètre supérieur ou égal à un tiers du diamètre du récipient,
- un second matériau particulaire (5) de diamètre équivalent De supérieur ou égal à 10 mm et supérieur aux dimensions des ouvertures de la coiffe (4), le second matériau particulaire (5) étant logé autour de la coiffe au moins jusqu'à une hauteur correspondant à l'extrémité supérieure de la coiffe (4), et
- un moyen de centrage (16) de la coiffe au-dessus de l'orifice d'entrée ou de sortie, fixé à la tuyauterie (17) qui est reliée à l'orifice.

2. Récipient (1) selon la revendication 1, **caractérisé en ce que** la coiffe (4) présente une paroi dont la base présente un diamètre supérieur ou égal à la moitié du diamètre du récipient (1).

3. Récipient (1) selon l'une des revendications 1 ou 2, **caractérisé en ce que** le second matériau particulaire (5) est de diamètre équivalent De supérieur ou égal à 25 mm.

4. Récipient (1) selon l'une des revendications 1 à 3, **caractérisé en ce que** le second matériau particulaire (5) est logé au-dessus de la coiffe au moins jusqu'à une hauteur supérieure ou égale à la hauteur de la coiffe plus 50 mm.

5. Récipient (1) selon l'une des revendications 1 à 4, **caractérisé en ce que** la coiffe est :
- soit de forme conique,
- soit en forme de calotte sphérique,
- soit en forme de cône tronqué avec la face en regard de l'orifice d'entrée ou de sortie essentiellement horizontale,
- soit de forme cylindrique avec la face en regard de l'orifice d'entrée ou de sortie essentiellement horizontale.

6. Récipient (1) selon l'une des revendications 1 à 5, **caractérisé en ce que** la coiffe (4) présente une paroi dont la base a été usinée de sorte que le contact (15) entre la coiffe (4) et le fond inférieur (3) ne soit pas ponctuel.

7. Récipient (1) selon l'une des revendications 1 à 6, **caractérisé en ce que** le contact (15) entre la coiffe (4) et le fond inférieur (3) s'effectue sur au moins 50% de la longueur de la base de la coiffe, préférentiellement sur au moins 80% et encore préférentiellement sur plus de 95% de cette longueur.

8. Récipient (1) selon l'une des revendications 1 à 7, **caractérisé en ce que** la coiffe (4) présente :
- un taux d'ajourage variable avec un taux pouvant varier entre 0 et 60% selon l'emplacement sur la coiffe, ou
- un taux constant choisi entre 5 et 40% .

9. Récipient (1) selon l'une des revendications 1 à 7, **caractérisé en ce que** la coiffe est recouverte d'un treillis métallique constitué préférentiellement d'une grille (11) surmontée d'une toile métallique souple (12) perméable au gaz.

10. Récipient (1) selon l'une des revendications 1 à 8, **caractérisé en ce que** le moyen de centrage (16) est constituée d'une tige dont l'extrémité supérieure est fixée à la coiffe (4) et d'un moyen de maintien de ladite tige au centre de la tuyauterie.

11. Récipient (1) selon l'une des revendications 1 à 10, **caractérisé en ce que** ledit dispositif comprend un déflecteur (70) placé en position horizontale dans le volume libre compris entre la coiffe (4) et le fond inférieur (3) du récipient.

12. Récipient (1) selon la revendication 11, **caractérisé en ce que** le déflecteur (70) présente une forme circulaire et de diamètre Dd supérieur ou égal au diamètre de l'orifice d'entrée ou de sortie.

13. Récipient (1) selon l'une des revendications 11 ou 12, **caractérisé en ce que** ledit dispositif comprend un espace libre entre le déflecteur (70) et la coiffe (4).

14. Unité d'épuration ou de séparation de gaz par adsorption de type PSA ou TSA comprenant au moins un adsorbeur mettant en oeuvre un récipient (1) selon l'une des revendications 1 à 13.

## Patentansprüche

1. Gasbehandlungsbehälter (1) zylindrischer Form mit vertikaler Achse umfassend einen zylindrischen Mantel mit vertikaler Achse, einen oberen Boden, einen unteren Boden (3), eine Einlassöffnung, eine Auslassöffnung, eine Gasverteilungsvorrichtung und ein erstes partikelförmiges Material (9), wobei die Verteilungsvorrichtung im Behälter (1) gegenüber der Gasein- oder auslassöffnung befestigt ist, die in den unteren Boden (3) mündet, wobei die Verteilungsvorrichtung Folgendes umfasst:
- eine gasdurchlässige Abdeckung (4), die die Öffnung abdeckt und eine Wand aufweist, davon die Basis, die im Wesentlichen kreisförmig ist, wobei die Abdeckung (4) dafür angeordnet ist, ohne Schweißung mit dem unteren Boden (3) in Kontakt (15) zu stehen und einen Durchmesser größer als oder gleich einem Drittel des Behälters aufweist,
- ein zweites partikelförmiges Material (5) mit äquivalentem Durchmesser De größer als oder gleich 10 mm und größer als die Abmessungen der Öffnungen der Abdeckung (4), wobei das zweite partikelförmige Material (5) um die Abmessung herum wenigstens bis zu einer Höhe aufgenommen ist, die dem oberen Ende der Abdeckung (4) entspricht, und
- ein Mittel zur Zentrierung (16) der Abdeckung oberhalb der Einlass- oder Auslassöffnung, das an der Rohrleitung (17) befestigt ist, die mit der Öffnung verbunden ist.

2. Behälter (1) nach Anspruch 1, **dadurch gekennzeichnet, dass** die Abdeckung (4) eine Wand aufweist, deren Basis einen Durchmesser größer als oder gleich der Hälfte des Durchmessers des Behälters (1) aufweist.

3. Behälter (1) nach einem der Ansprüche 1 oder 2, **dadurch gekennzeichnet, dass** das zweite partikelförmige Material (5) einen äquivalenten Durchmesser De größer als oder gleich 25 mm aufweist.

4. Behälter (1) nach einem der Ansprüche 1 bis 3, **dadurch gekennzeichnet, dass** das zweite partikelförmige Material (5) oberhalb der Abdeckung wenigstens bis zu einer Höhe aufgenommen ist, die größer als oder gleich der Höhe der Abdeckung plus 50 mm ist.

5. Behälter (1) nach einem der Ansprüche 1 bis 4, **dadurch gekennzeichnet, dass** die Abdeckung:
- entweder kegelförmig oder kugelkappenförmig ist,
- oder kegelstumpfförmig ist, wobei die Fläche, die der Einlass- oder Auslassöffnung gegenüberliegt, im Wesentlichen horizontal ist,
- oder zylinderförmig ist, wobei die Fläche, die der Einlass- oder Auslassöffnung gegenüberliegt, im Wesentlichen horizontal ist.

6. Behälter (1) nach einem der Ansprüche 1 bis 5, **dadurch gekennzeichnet, dass** die Abdeckung (4) eine Wand aufweist, deren Basis so bearbeitet wurde, dass der Kontakt (15) zwischen der Abdeckung (4) und dem unteren Boden (3) nicht punktförmig ist.

7. Behälter (1) nach einem der Ansprüche 1 bis 6, **dadurch gekennzeichnet, dass** der Kontakt (15) zwischen der Abdeckung (4) und dem unteren Boden (3) über wenigstens 50 % der Länge der Basis der Abdeckung, vorzugsweise über wenigstens 80 % und weiter bevorzugt über mehr als 95 % dieser Länge erfolgt.

8. Behälter (1) nach einem der Ansprüche 1 bis 7, **dadurch gekennzeichnet, dass** die Abdeckung (4) Folgendes aufweist:
- einen variablen Lochungsgrad, mit einem Grad, der zwischen 0 und 60 % variieren kann, je nach der Stelle der Abdeckung, oder
- einen konstanten Grad zwischen 5 und 40 %.

9. Behälter (1) nach einem der Ansprüche 1 bis 7, **dadurch gekennzeichnet, dass** die Abdeckung von einem Metallgitter bedeckt ist, das vorzugsweise von einem Rost (11) gebildet ist, der von einem gasdurchlässigen biegsamen Metallgewebe (12) überdeckt ist.

10. Behälter (1) nach einem der Ansprüche 1 bis 8, **dadurch gekennzeichnet, dass** das Zentriermittel (16) von einem Stift, dessen oberes Ende an der Abdeckung (4) befestigt ist, und einem Mittel zum Halten des Stifts in der Mitte der Rohrleitung gebildet ist.

11. Behälter (1) nach einem der Ansprüche 1 bis 10, **dadurch gekennzeichnet, dass** die Vorrichtung einen Ablenker (70) umfasst, der in horizontaler Lage im freien Volumen zwischen der Abdeckung (4) und dem unteren Boden (3) des Behälters platziert ist.

12. Behälter (1) nach Anspruch 11, **dadurch gekennzeichnet, dass** der Ablenker (70) eine Kreisform und einen Durchmesser Dd größer als oder gleich dem Durchmesser der Einlass- oder Auslassöffnung aufweist.

13. Behälter (1) nach einem der Ansprüche 11 oder 12, **dadurch gekennzeichnet, dass** die Vorrichtung einen freien Raum zwischen dem Ablenker (70) und der Abdeckung (4) aufweist.

14. Einheit zur Reinigung oder Trennung von Gas durch PSA- oder TSA-Adsorbtion umfassend wenigstens einen Adsorber, der einen Behälter (1) nach einem der Ansprüche 1 bis 13 verwendet.

## Claims

1. Gas processing vessel (1) of cylindrical shape with a vertical axis, comprising a cylindrical shell of vertical axis, an upper end wall, a lower end wall (3), an inlet orifice, an outlet orifice, a gas distribution device and a first particulate material (9), the distribution device being fixed in said vessel (1) next to the gas inlet or outlet orifice recessed into the lower end wall (3), the distribution device comprising:
- a gas-permeable cover (4) covering said orifice and having a wall with a substantially circular base, the cover (4) being designed to be in contact (15) without a weld with the lower end wall (3) and having a diameter greater than or equal to one third of the diameter of the vessel,
- a second particulate material (5) with an equivalent diameter De greater than or equal to 10 mm and greater than the dimensions of the openings in the cover (4), the second particulate material (5) being accommodated around the cover at least to a height corresponding to the upper end of the cover (4), and
- a means (16) for centering the cover above the inlet or outlet orifice, said means being fixed to the pipe (17) that is connected to the orifice.

2. Vessel (1) according to Claim 1, **characterized in that** the cover (4) has a wall, the base of which has a diameter greater than or equal to half the diameter of the vessel (1).

3. Vessel (1) according to either of Claims 1 and 2, **characterized in that** the second particulate material (5) has an equivalent diameter De greater than or equal to 25 mm.

4. Vessel (1) according to one of Claims 1 to 3, **characterized in that** the second particulate material (5) is accommodated above the cover at least to a height greater than or equal to the height of the cover plus 50 mm.

5. Vessel (1) according to one of Claims 1 to 4, **characterized in that** the cover is:
- either in the form of a cone,
- or in the form of a spherical cap,
- or in the form of a truncated cone with the face facing the inlet or outlet orifice being substantially horizontal,
- or in the form of a cylinder with the face facing the inlet or outlet orifice being substantially horizontal.

6. Vessel (1) according to one of Claims 1 to 5, **characterized in that** the cover (4) has a wall, the base of which has been machined such that the contact (15) between the cover (4) and the lower end wall (3) is not point contact.

7. Vessel (1) according to one of Claims 1 to 6, **characterized in that** the contact (15) between the cover (4) and the lower end wall (3) is achieved along at least 50% of the length of the base of the cover, preferably along at least 80% and more preferably along more than 95% of this length.

8. Vessel (1) according to one of Claims 1 to 7, **characterized in that** the cover (4) has:
- a variable percentage of perforation with a percentage that can vary between 0 and 60% depending on the location on the cover, or
- a constant percentage chosen between 5 and 40%.

9. Vessel (1) according to one of Claims 1 to 7, **characterized in that** the cover is covered with a metal lattice preferably made up of a grating (11) surmounted by a gas-permeable flexible metal gauze (12).

10. Vessel (1) according to one of Claims 1 to 8, **characterized in that** the centering means (16) is made up of a rod, the upper end of which is fixed to the cover (4), and of a means for maintaining said rod at the center of the pipe.

11. Vessel (1) according to one of Claims 1 to 10, **characterized in that** said device comprises a deflector (70) positioned in a horizontal position in the free volume between the cover (4) and the lower end wall (3) of the vessel.

12. Vessel (1) according to Claim 11, **characterized in that** the deflector (70) has a circular shape with a diameter Dd greater than or equal to the diameter of the inlet or outlet orifice.

13. Vessel (1) according to either of Claims 11 and 12, **characterized in that** said device comprises a free space between the deflector (70) and the cover (4).

14. Unit for purifying or separating gases by adsorption of the PSA or TSA type, comprising at least one adsorber employing a vessel (1) according to one of Claims 1 to 13.
